# EUROPÄISCHE PATENTSCHRIFT

(11) **EP 0 914 935 B1**
(45) Veröffentlichungstag und Bekanntmachung des Hinweises auf die Patenterteilung: **23.05.2001**
(21) Anmeldenummer: 98123347.1
(22) Anmeldetag: 08.12.1998
(51) Int. Cl.: B29C 65/10

(54) **Vorrichtung zum Verschweissen von Kunststoffbahnen**
Apparatus for welding webs of plastic material
Dispositif pour souder des bandes en matériau plastique

(30) Priorität: 09.03.1998 CH 56198
(43) Veröffentlichungstag der Anmeldung: 12.05.1999
(73) Patentinhaber: SARNA PATENT- UND LIZENZ-AG, 6060 Sarnen (CH)
(72) Erfinder: Huser, Paul, 6072 Sachseln (CH)
(74) Vertreter: Troesch Scheidegger Werner AG

(56) Entgegenhaltungen:
- DE-A- 3 520 682
- PATENT ABSTRACTS OF JAPAN vol. 017, no. 136 (M-1384), 19. März 1993 & JP 04 314526 A (SEKISUI PLASTICS CO LTD), 5. November 1992

## Beschreibung

Die vorliegende Erfindung betrifft eine Vorrichtung zum Verschweissen von Folien bzw. Kunststoffbahnen gemäss dem Oberbegriff nach Anspruch 1 sowie ein Verfahren zum Verschweissen von Folien bzw. Kunststoffbahnen.

Schweissgeräte zum Verschweissen von Kunststoffbahnen, wie insbesondere von Abdichtungsbahnen auf Hausdächern, Vordächern, an Betonbauten, in Bassins, in Ölwannen etc. sind bekannt.

Dabei wird von einem Heissluftgebläse heisse Luft von ca. 250 - 450°C durch eine flache Breitschlitzdüse zwischen die Folien im Bereich des Randabschlusses der einen, die andere Folie überlappenden Folie bzw. Kunststoffbahn geblasen, um die beiden Folien in diesem Bereich zu erweichen, d.h. an der Oberfläche zu plastifizieren. Mittels einer nachfolgenden Anpresswalze oder - rolle werden dann die beiden Folien miteinander verbunden bzw. verschweisst. So entsteht die sogenannte "Schweissnaht".

Es hat sich gezeigt, dass bei längerer Lagerung der Folien im Freien, unter Einfluss von Feuchtigkeit, Luftverschmutzung und Baustellenschmutz sich offenbar eine Art Alterungsschicht bildet, welche ein einwandfreies Verschweissen der beiden Folien kaum mehr ermöglicht.

Insbesondere bei der Verwendung eines derart bekannten Schweissgerätes, wie beispielsweise beschrieben im CH-Patent 677 898, zum Verschweissen von Folien aus Polyolefinen, hat sich die oben geschilderte Problematik eingestellt, was gelegentlich zum Versagen, d.h. Öffnen der Schweissnaht, führen kann.

Beim Verarbeiten von Polyolefin-Dichtungsbahnen können, bei ungünstigen Baustellenbedingungen, ungenügende Schweissnahtfestigkeiten resultieren. Dies führt zu grossen Folgeschäden durch Versagen der Abdichtung.

Aus der WO90/11883 ist eine Schweissmaschine bekannt, aufweisend eine Heissluftdüse, um die zu verschweissenden Kunststofffolien zu erhitzen und zu erweichen, analog dem Schweissgerät aus dem CH-Patent 677 898. Zusätzlich ist nun an der Breitschlitzdüse ein Vorsatz vorgesehen, um den aus der Düse austretenden Heissluftstrom gegen die Oberflächen der beiden zugeführten Folien abzulenken, damit nicht der ganze Heissluftstrom in den Verschweissbereich geblasen wird. Mittels dieser Massnahme kann jedoch das oben geschilderte Problem nicht gelöst werden. Bei mittels der letztgenannten Schweissmaschine verbundenen Kunststofffolien stellt sich die geschilderte Problematik nicht ein, da hier ohnehin zwei Gegendruck erzeugende Anpressrollen vorgesehen sind, welche ein wesentlich effizienteres Zusammenfügen der Folien ermöglichen.

Gerade beim Abdichten von Flachdächern, beim Auskleiden von Bassins und Öltanks müssen jedoch Schweissmaschinen verwendet werden, welche nur einseitig, d.h. auf derjenigen Seite der Folien, wo die Schweissmaschine angeordnet ist, eine Anpressrolle aufweisen. Eine derartige Schweissmaschine ist der CH 677 898 zu entnehmen.

Aus der DE 35 20 682 ist ein Schweissgerät zum Verschweissen von Folien im Aussenbereich beschrieben, bei dem an einem L-förmigen Schweissschuh eine Reinigungs- und/oder Aufrauheinrichtung in Form eines Kettentriebes angeordnet ist. Die Verschweissung selbst erfolgt durch ein Schweissmaterial, wie beispielsweise mittels eines sogenannten thermoplastischen Kunststoff-Hotmelts.

In der JP 03008766 wiederum wird vorgeschlagen, für das Verschweissen von zwei geschäumten Folien für das Laminieren derselben die beiden Oberflächen mittels Metallbürsten zunächst aufzurauhen und anschliessend die Oberflächen zu erhitzen und zusammenzufügen.

Es ist eine Aufgabe der vorliegenden Erfindung, eine weitere Schweissvorrichtung vorzuschlagen, mittels welcher das Verschweissen von Kunststoffbahnen, insbesondere hergestellt aus Polyolefinen, einwandfrei ermöglicht wird.

Erfindungsgemäss wird die gestellte Aufgabe mittels einer Vorrichtung gemäss dem Wortlaut nach Anspruch 1 gelöst.

Vorgeschlagen wird eine Vorrichtung zum Verschweissen von Folien bzw. Kunststoffbahnen, aufweisend einen Heisslufterzeuger, eine eine schlitzartige Öffnung aufweisende Düse, vorgesehen, um die Heissluft zwischen zwei zu verschweissende Folien bzw. Kunststoffbahnen einzublasen, sowie eine Anpressrolle. Erfindungsgemäss zeichnet sich die Vorrichtung durch mindestens eine Schleifeinrichtung im Bereich der schlitzartigen Öffnung, oder dieser vorgelagert, aus, mittels welcher Schleifeinrichtung die zu verschweissenden bzw. zu verbindenden Oberflächen der Folien bzw. Kunststoffbahnen angeschliffen oder aufgerauht werden können. Bei dieser Schleifeinrichtung kann es sich sowohl um Leit- oder Schleifbleche bzw. von der Düse federartig vorstehende Lamellen handeln, oder aber um eine rollenartige Schleifwalze, welche in Bearbeitungsrichtung nachgeschaltet zur Düse angeordnet ist, und entlang welcher Schleifwalze die erhitzten Folien bzw. Kunststoffbahnen geführt werden.

Weitere bevorzugte Ausführungsvarianten der erfindungsgemässen Vorrichtung sind in den abhängigen Ansprüche 2 bis 9 charakterisiert. Weiter vorgeschlagen wird ein Verfahren zum Verbinden bzw. Verschweissen von Folien bzw. Kunststoffbahnen mittels Heissluft, wobei die Oberfläche der beiden miteinander zu verbindenden Folien bzw. Kunststoffbahnen angeschliffen bzw. angerauht werden.

Die Erfindung wird nun beispielsweise und unter Bezug auf die beigefügten Figuren näher erläutert. Dabei zeigen:
- Fig. 1: in Frontansicht, schematisch einen Schweissautomaten, beispielsweise bekannt aus der CH 677 898,
- Fig. 2: den Schweissautomaten aus Fig. 1 in Ansicht von oben,
- Fig. 3: in Perspektive, eine Heissluftdüse, beispielsweise bekannt aus der CH 677 898,
- Fig. 4a bis 4d: eine Ausführungsvariante einer erfindungsgemässen Heissluftdüse,
- Fig. 5a bis 5d: eine weitere Ausführungsvariante der erfindungsgemässen Heissluftdüse,
- Fig. 6: wiederum eine weitere Ausführungsvariante einer erfindungsgemässen Heissluftdüse,
- Fig. 7: im Schnitt, eine Schweissnaht zweier erfindungsgemäss miteinander verschweisster Kunststoffbahnen und
- Fig. 8 und 9: grafisch dargestellt, die idealen Geräteeinstellparameter, um Folien mittels einer erfindungsgemässen Vorrichtung miteinander zu verschweissen.

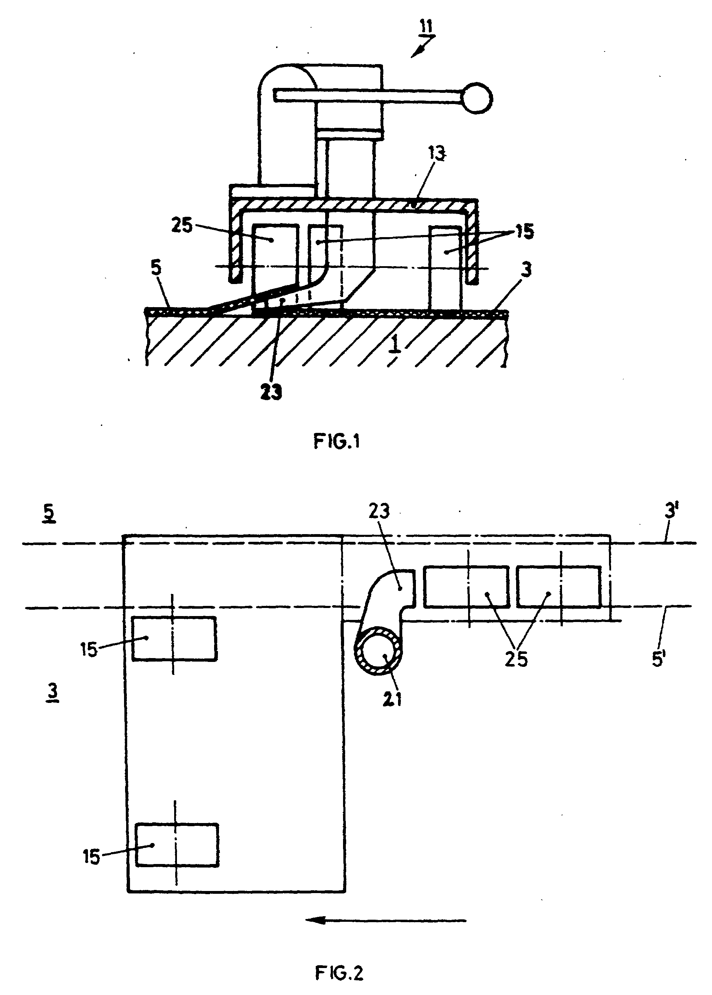

Fig. 1 zeigt in Ansicht von vorne einen Schweissautomaten zum Verschweissen zweier Kunststoffbahnen bzw. Abdichtungsbahnen im Bereich, wo sich die beiden abschliessenden Ränder überlappen.

Auf einer Unterlage 1, wie beispielsweise einem Flachdach, Garagendach, einem Bassinboden etc., sind zwei sich im Randbereich überlappende Folien bzw. Kunststoffbahnen 3 und 5 mittels Schweissen zu verbinden. Bei diesen Kunststoffolien kann es sich sowohl um Polyolefin-Folien handeln, wie auch um Folien aus einem anderen, geeigneten Kunststoff, wie z.B. P-PVC (Weich-PVC).

Im Randbereich der beiden Folien 3 und 5 erfolgt nun die Schweissung mittels eines Schweissautomaten 11, aufweisend eine Halterung bzw. ein Gehäuse 13, geführt auf Laufrollen 15. Eine Heissluftdüse 23 ragt in den überlappenden Bereich der Folien 3 und 5. Mittels einer der Düse 23 nachfolgenden Anpressrolle 25 werden die erhitzten und erweichten oder angeschmolzenen Oberflächen der beiden Bahnen 3 und 5 im Überlappungsbereich miteinander verpresst.

In Fig. 2 ist der Schweissautomat 11 in Ansicht von oben dargestellt, wobei die Arbeitsrichtung bzw. der Verschweissvorgang in Pfeilrichtung erfolgt. Dabei sind deutlich die Heissluftdüse 23 und nachfolgend die Anpressrollen 25 zum Verpressen der angeschmolzenen Kunststoffbahnen zu erkennen. Das Verpressen erfolgt im überlappenden Bereich, wobei in Fig. 2 die beiden Abschlussränder der überlappenden Kunststoffbahnen 3 und 5 mit 3' bzw. 5' bezeichnet sind.

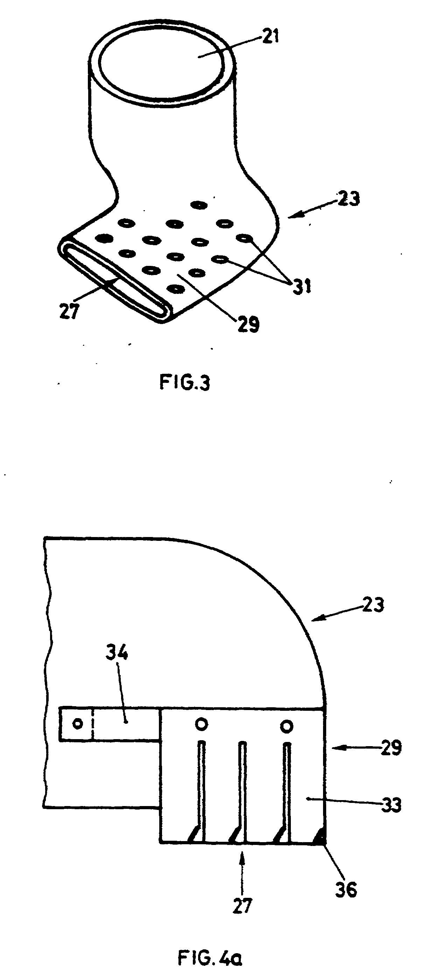

In Fig. 3 ist in Perspektive eine aus dem Stand der Technik bekannte Heissluftdüse 23 dargestellt, welche über einen Heissluftkanal 21 mit Heissluft gespeist wird. Endständig ist eine Breitschlitzdüse 27 vorgesehen, durch welche die Heissluft zwischen die beiden zu verschweissenden Kunststoffolien geblasen wird. Zum Führen der Heissluft zwischen die beiden Folien weist die Düse 23 weiter einen flächigen Düsenkörper 29 auf, in welchem vorzugsweise nach oben und nach unten offene Perforierungen bzw. Kleinstlochungen 31 vorgesehen sind, zum "Vorwärmen" (Elastifizieren) der zu verschweissenden Folien.

Bei Gebrauch einer Heissluftdüse, dargestellt in Fig. 3, hat es sich nun gezeigt, dass bei längerer Lagerung der Folien im Freien ein Verschweissen erschwert ist, d.h. insbesondere bei Verwendung von Polyolefinen ist die Verschweissung nur ungenügend; oder die Oberflächen der Folien sind infolge Witterung, wie beispielsweise Feuchtigkeit, Staub, UV-Bestrahlung und dergleichen, derart beeinflusst, dass ein einwandfreies Verschweissen verunmöglicht wird. Heute werden für die Vorbereitung des Verschweissens der Folien deren Oberflächen im Nahtbereich mittels geeigneter Lösungsmittel gereinigt, was aus ökologischer Sicht, aufgrund gesundheitlicher Aspekte und auch in Folge erhöhten Arbeitsaufwandes problematisch bzw. unerwünscht ist.

Aus diesem Grunde wird nun erfindungsgemäss die Verwendung einer Düse vorgeschlagen, beispielsweise dargestellt in den Fig. 4a bis 4d. Dabei zeigt Fig. 4a schematisch, von oben gesehen wiederum eine Breitschlitzdüse 23, aufweisend die schlitzartige Öffnung 27 zum Ausgeben der Heissluft. Im Bereich der schlitzartigen Öffnung bzw. im Bereich des Düsenkörpers 29 sind nun in der Heissluftdüse gemäss den Fig. 4a bis 4d einzelne Lamellen vorgesehen, wobei in Fig. 4a die oberhalb der Schlitzöffnung 27 angeordneten Lamellen 33 sichtbar sind. Diese nebeneinander angeordneten Lamellen 33 sind rückseitig miteinander verbunden und werden über eine Haltelasche 34 an der Heissluftdüse 23 gehalten. Im Bereich der schlitzartigen Öffnung 27 weisen die einzelnen Lamellen 33 nach oben aufgebogene Endpartien 36 auf, um ein Einführen der oberhalb der Düse 23 angeordneten Folie zu ermöglichen.

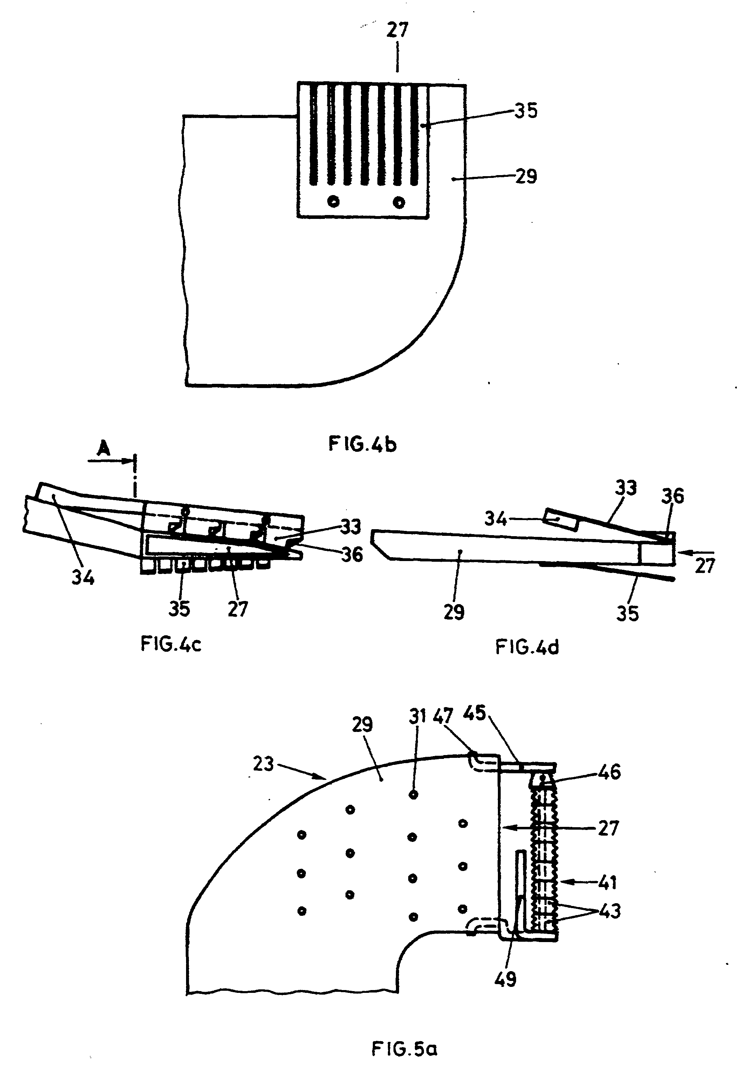

Fig. 4b zeigt entsprechend die Heissluftdüse 23 in Ansicht von unten, wobei unterhalb der schlitzartigen Öffnung 27 angeordnete Lamellen 35 erkennbar sind. Wiederum sind mehrere längsausgedehnte, einzelne Lamellen 35 nebeneinander angeordnet, damit ein besseres Anpassen an die Oberfläche der anzuschleifenden Folie möglich ist.

Fig. 4c zeigt die erfindungsgemässe Heissluftdüse 23 in Richtung gegen die schlitzartige Öffnung gesehen, wobei die oberhalb und unterhalb angeordneten Lamellen 33 bzw. 35 deutlich erkennbar sind.

Aus Fig. 4d, gesehen in Pfeilrichtung A aus Fig. 4c, ist weiter deutlich erkennbar, wie die unteren Lamellen 35 gegen die schlitzartige Öffnung 27 federartig vorstehend angeordnet sind. Damit wird ein gewisser Schleifdruck gegen die unterhalb angeordnete, anzuschleifende Folie bewirkt, bzw. die Schleifwirkung wird erhöht. Derselbe Effekt wird mit den oberhalb angeordneten Lamellen 33 erreicht, wo wiederum durch eine Federwirkung in der Haltelasche 34 diese Lamellen im rückseitigen Bereich nach oben vorstehen. Schlussendlich durch das Anordnen der aufgebogenen Partien 36 im Endbereich der Laschen 33 wird die Schleifwirkung der oberhalb angeordneten Lamellen 33 weiter erhöht.

In den Fig. 5a bis 5d wird eine weitere Ausführungsvariante einer erfindungsgemässen Heissluftdüse 23 dargestellt, wobei Fig. 5a die Düse in Ansicht von oben zeigt. Vorgelagert zur schlitzartigen Öffnung 27, in Bearbeitungsrichtung nachgeschaltet, ist eine Schleifwalze 41, welche durch mehrere nebeneinander angeordnete Reibwalzen 43 gebildet wird. Diese Walzen oder Rollen 43 sind nebeneinander auf einem Haltebügel 45 angeordnet, welcher in Öffnungen 47 im Düsenkörper 29 federartig gehalten wird. Damit die oberhalb der Heissluftdüse 23 angeordnete Kunststoffbahn bzw. Folie gegen die Schleifwalze 41 geführt bzw. an dieser gehalten wird, ist weiter ein Führungsbügel 49 vorgesehen, welcher die oberhalb angeordnete Kunststoffolie bzw. Kunststoffbahn aussen umgreift.

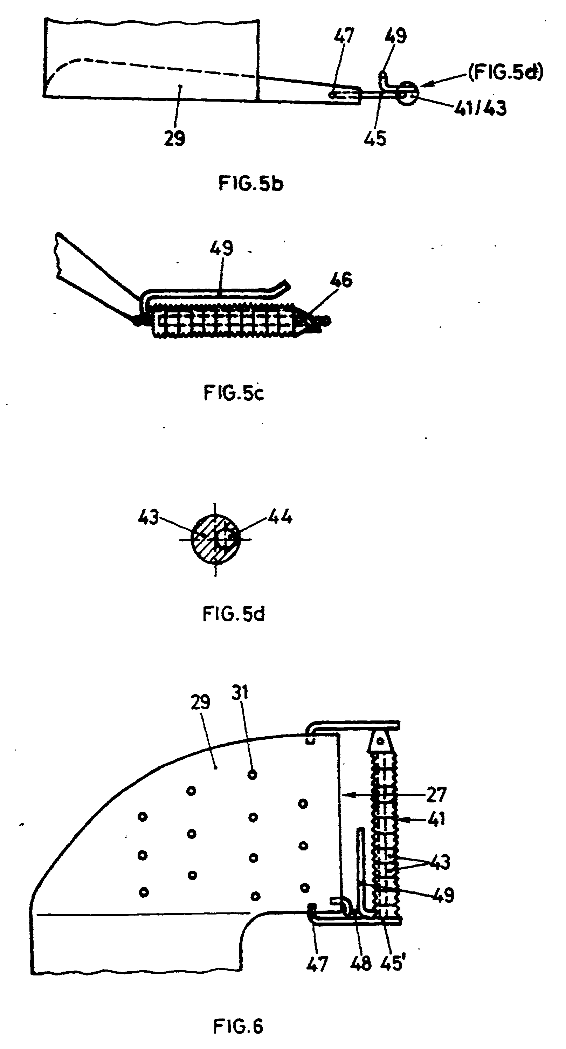

Fig. 5b zeigt die erfindungsgemässe Düse aus Fig. 5a in Seitenansicht, währenddessen in Fig. 5d eine einzelne Reibrolle oder Reibwalze 43 im Schnitt dargestellt ist. Fig. 5d zeigt, dass die mittige Öffnung 44, zum Halten der Rolle bzw. Walze 43 auf dem Haltebügel 45, exzentrisch angeordnet ist, damit bei auftretenden Unebenheiten der Unterlage sich die einzelnen Walzen individuell an diese Unebenheiten anpassen können.

Fig. 5c zeigt die erfindungsgemässe Ausführungsvariante der Fig. 5a und 5b in Ansicht gegen die schlitzartige Öffnung 27 gesehen, wobei nun deutlich der Führungsbügel 49 erkennbar ist. Weiter deutlich erkennbar ist, dass vorzugsweise die erste Reibwalze 46 gegen die "Innenseite" der Oberflächen der beiden Folien, welche zu verschweissen sind, konusartig ausgebildet ist, damit die Schleifwalze gut zwischen die Folienbahnen eingeführt werden kann.

Fig. 6 zeigt eine der Ausführungsform der Fig. 5a bis 5d ähnliche Ausführung einer erfindungsgemässen Heissluftdüse 23, indem wiederum nachgeschaltet der schlitzartigen Öffnung 27 eine Reib- oder Schleifwalze 41 angeordnet ist. Im Unterschied zur Ausführungsform in den Fig. 5a bis 5d ist die Halteklammer 45' derart ausgebildet, dass sie aussen umgreifend in einer entsprechenden Lochung 47 im Düsenkörper 29 gehalten ist. Der Vorteil dieser Ausführungsform liegt darin, dass die Reib- bzw. Schleifwalze 41 Unebenheiten, herrührend vom Untergrund, ausgleichen kann. Allerdings muss im Fall der Ausführung gemäss Fig. 6 eine Auslenkbegrenzung vorgesehen werden, ansonsten die Schleif- bzw. Reibwalze 41 leicht unkontrolliert nach unten oder nach oben auslenken kann. Aus diesem Grunde ist weiter ein Stift 48 vorgesehen, welcher in die schlitzartige Öffnung 27 eingreift, und welcher die geforderte Auslenkbegrenzung ermöglicht.

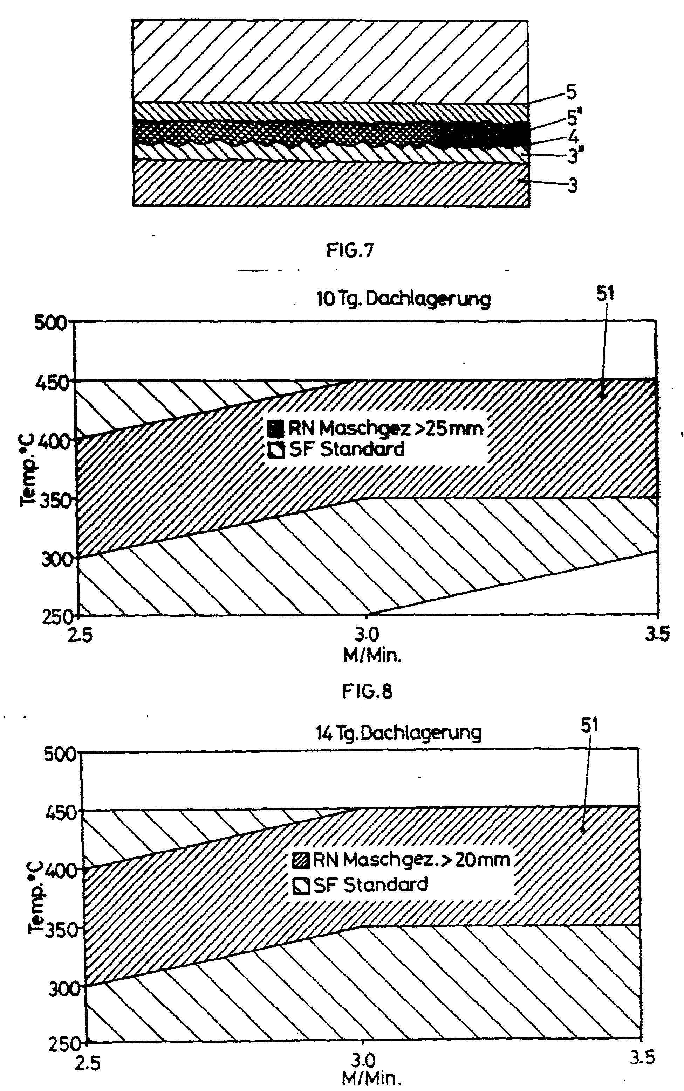

In Fig. 7 ist nun ein Schnitt durch zwei miteinander verschweisste Dichtungsbahnen im Schweissnahtbereich im Querschnitt dargestellt. Dabei handelt es sich um die Verschweissung zweier Zweischichtbahnen, je aufweisend eine untere, dunkle Schicht und eine obere, helle Schicht. Miteinander verschweisst sind somit die untere, dunkle Schicht 5'' der oberen Kunststoffbahn mit der oberen, hellen Schicht 3'' der unteren Kunststoffbahn. Infolge der Reibung bzw. des Schleifens ist die Grenzfläche 4 zwischen den beiden Kunststoffbahnen nicht eben ausgebildet, sondern, wie in Fig. 7 dargestellt, gezackt. Durch dieses Anschleifen bzw. Aufrauhen der beiden miteinander zu verschweissenden Oberflächen konnte so eine einwandfreie Verschweissung hergestellt werden, wie insbesondere bei Polyolefin-Dichtungsbahnen, wie beispielsweise Polyethylen-, Ethylen-Copolymer- oder Polypropylen-EPM-Reaktorblend-Dichtungsbahnen.

In den Fig. 8 und 9 sind anhand von grafischen Darstellungen die optimalen Schweissparameter dargestellt, bei welchen Polyolefin-Bahnen bzw. -Folien verschweisst werden können. Dabei zeigt Fig. 8 die Verschweissung von zwei Polyolefin-Bahnen, welche vor dem Verschweissen während zehn Tagen im Freien gelagert worden sind. Anhand der nachfolgend in Tabelle 1 dargestellten Schweissparameter erfolgte die Verschweissung der gelagerten Polyolefin-Bahnen, wobei nachfolgende Abschälprüfungen den mit Schwarz gekennzeichneten Bereich 51 ergaben. Die Verschweissungen erfolgten bei den in Tabelle 1 angegebenen Temperaturbereichen bei drei unterschiedlichen Geschwindigkeiten der Schweissmaschine mittels einer Heissluftdüse, dargestellt in den Fig. 5a bis 5d resp. Fig. 6. Dabei bezieht sich die Temperatur auf diejenige der aus der Düse austretenden Heissluft. Die Prüfung der Schweissnähte erfolgte sowohl von Hand wie auch mittels Zugprüfmaschinen. Die gemessenen Werte sind ebenfalls in Tabelle 1 enthalten.

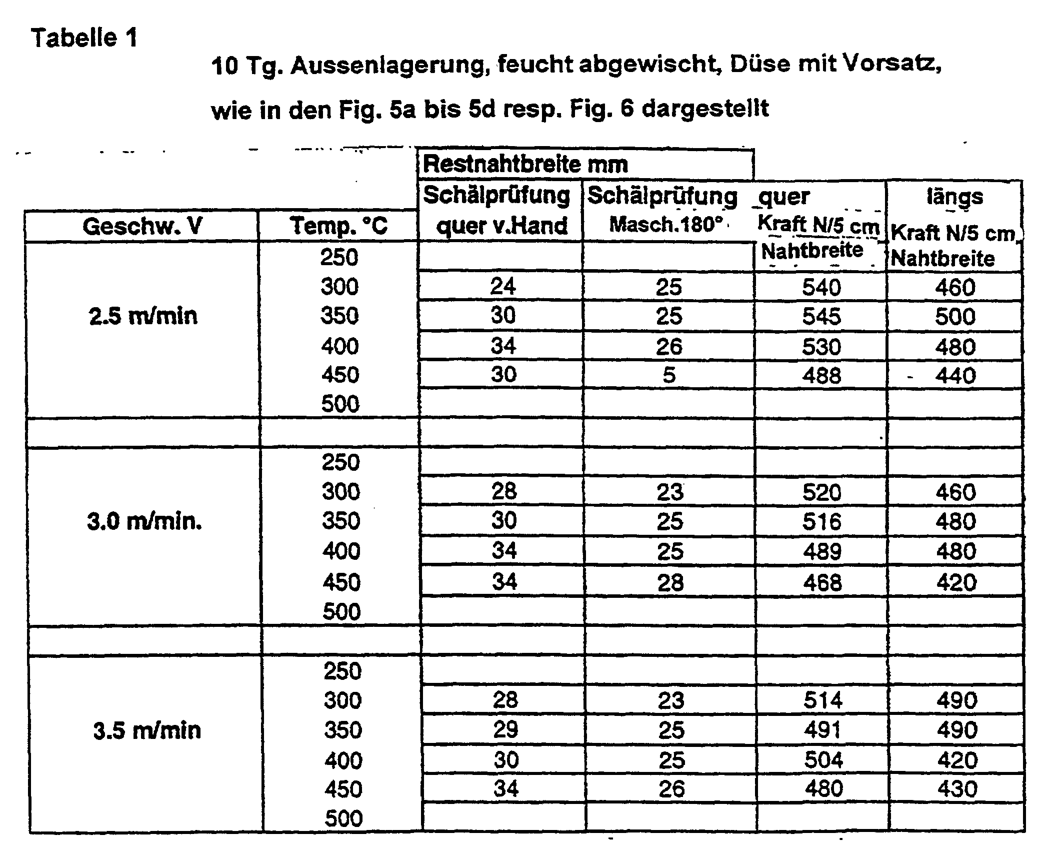

Fig. 9 zeigt analog dazu den Verarbeitungsbereich 51 beim Verschweissen von Polyolefin-Folien, welche während 14 Tagen gelagert worden sind resp. der Witterung ausgesetzt waren. Dabei zeigt sich deutlich, dass sich die Bereiche 51 der beiden Fig. 8 und 9 im wesentlichen gleichen. Auch die in den Tabellen 1 und 2 dargestellten Werte sind im wesentlichen deckungsgleich.

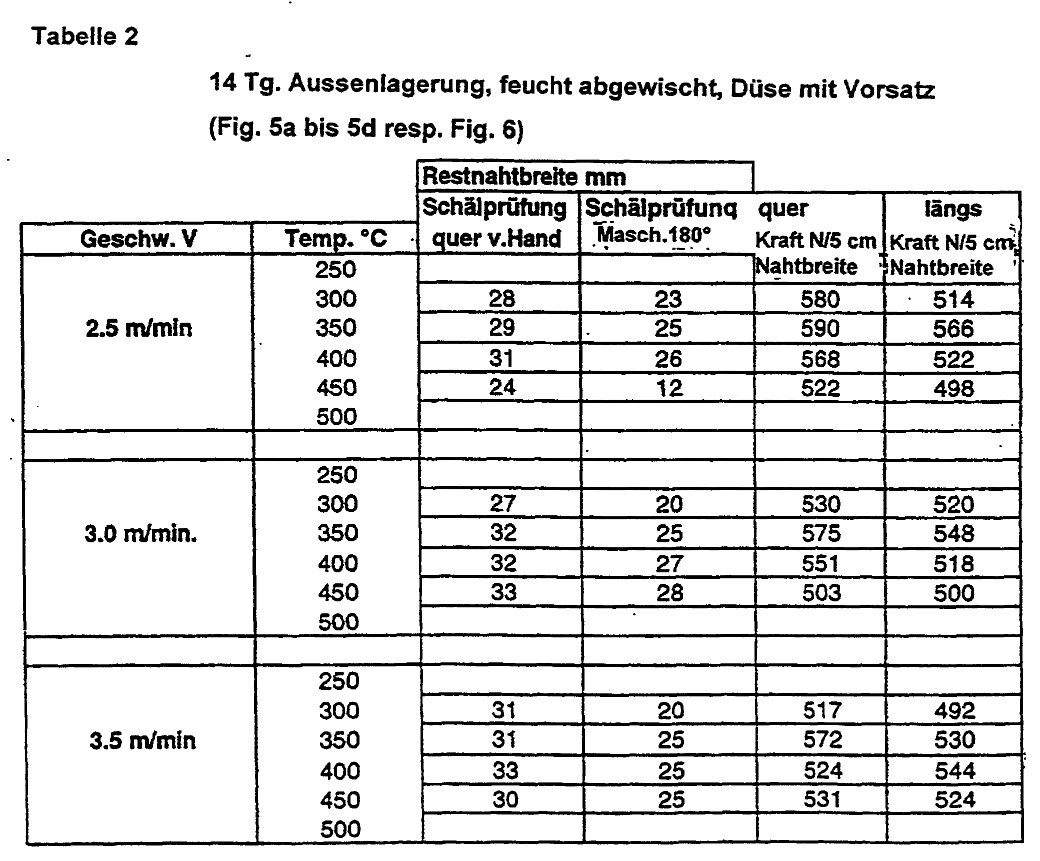

Bei Verwendung einer aus dem Stand der Technik bekannten Düse, wie dargestellt in Fig. 3, ergaben sich bei allen Versuchsbedingungen ungenügende Verschweissungen, d.h. die beiden verschweissten Folien konnten bei der Schälprüfung jeweils voneinander getrennt werden.

Bei den in den Fig. 4 bis 6 dargestellten, erfindungsgemässen Heissluftdüsen handelt es sich selbstverständlich nur um Ausführungsbeispiele, welche dazu dienen, die Erfindung besser zu erläutern. Selbstverständlich ist es möglich, diese Düsen abzuändern, zu modifizieren oder durch weitere Elemente zu ergänzen im Rahmen der Schutzansprüche 1 und 9. So ist es beispielsweise möglich, anstelle der in den Fig. 5 und 6 verwendeten Reibwalzen bzw. Reibrollen eine Art Unterlagsscheiben zu verwenden, welche wiederum aufgereiht auf einem Haltebügel angeordnet sind. Auch die Verwendung von Kleinst-Stahlbürstenrollen und dergleichen ist denkbar. Auch ist es möglich, beispielsweise anstelle einer Breitschlitzöffnung bei der Düse eine Anzahl individueller runder Düsenöffnungen nebeneinander anzuordnen, wichtig ist ja nur, dass die Heissluft breitflächig je auf die Oberfläche der beiden zu verschweissenden Kunststoffolien eingeblasen wird. Wesentlich ist, dass vor dem Verpressen beim Schweissvorgang der beiden Folien bzw. Kunststoffbahnen diese angeschliffen bzw. aufgerauht werden.

## Patentansprüche

1. Vorrichtung zum Verschweissen von Folien bzw. Kunststoffbahnen, aufweisend eine Heisslufterzeugung sowie eine für die Ausgabe der Heissluft vorzugsweise eine schlitzartige Öffnung (27) aufweisende Düse (23), vorgesehen, um die Heissluft zwischen zwei zu verschweissende Folien bzw. Kunststoffbahnen (3, 5) einzublasen, mit mindestens einer rollen- oder walzenartigen Schleifeinrichtung (41), welche an der vorzugsweise schlitzartigen Düse bzw. Öffnung (27) vorgelagert bzw. dieser in Bearbeitungsrichtung nachgeschaltet ist, um die zu verschweissenden Oberflächen der Folien bzw. Bahnen vor dem Zusammenpressen anzuschleifen oder aufzurauhen, dadurch gekennzeichnet, daß im Bereich der Düse bzw. der Öffnung nach oben und/oder nach unten vorstehende Leitoder Schleifbleche (33, 35) vorgesehen sind, entlang welcher die zu verschweissenden Kunststoffbahnen vor dem Schweissen entlanggeführt werden bzw. entlangschleifen.

2. Vorrichtung nach Anspruch 1, dadurch gekennzeichnet, dass die Walze (41) aus mehreren nebeneinander gereihten, zylinderartigen Rollen oder Walzen (43) besteht, welche auf einem an der Öffnung (27) oder am Heissluftzufuhrkörper (29) angehängten, klammerartigen Halte- bzw. Querstab (45) aufgereiht sind.

3. Vorrichtung nach Anspruch 2, dadurch gekennzeichnet, dass die Rollen oder Walzen (43) eine aufgerauhte Oberfläche aufweisen und je die mittige Haltebohrung (44) exzentrisch ausgebildet ist, damit bei unebener oder unegaler Auflage sich die Rollen oder Walzen dieser anpassen können.

4. Vorrichtung nach einem der Ansprüche 1 bis 3, dadurch gekennzeichnet, dass die Schleifwalze (41) weiter einen seitlich von der Unterlagefolie (3) wegverlaufenden, die obere, mit der Unterlage-Folie zu verbindende Folie (5) aussen umgreifenden Führungsbügel (49) aufweist, um die obere Folie (5) gegen die Schleifwalze zu führen bzw. auf dieser zu halten.

5. Vorrichtung nach einem der Ansprüche 1 bis 4, dadurch gekennzeichnet, dass an der Schleifwalze (41) Mittel (48) vorgesehen sind, um ein Aufwärts- ober Abwärts-Auslenken in bezug auf die schlitzartige Öffnung (27) zu begrenzen.

6. Vorrichtung nach Anspruch 1, dadurch gekennzeichnet, dass federartige Lamellen (33, 35) von der Düse bzw. von der vorzugsweise schlitzartigen Öffnung (27) nach unten bzw. nach oben vorstehen, wobei quer zur Richtung der auszublasenden Heissluft mehrere Lamellen nebeneinander angeordnet sind, derart, dass sie sich je der Kontur der anzuschleifenden Oberfläche der Folie bzw. Kunststoffbahn anpassen kann.

7. Vorrichtung nach einem der Ansprüche 1 bis 6, dadurch gekennzeichnet, dass an der Düse, der vorzugsweise schlitzartigen Öffnung (27) vorgeschaltet, Perforierungen oder Kleinstlochungen (31) im Heissluftzufuhrkanal bzw. -körper (29) vorgesehen sind, um die beiden zu verbindenden Folienoberflächen vorzuwärmen.

8. Vorrichtung nach einem der Ansprüche 1 bis 7, dadurch gekennzeichnet, dass in Verarbeitungsrichtung nachfolgend an die Öffnung für die Ausgabe für die Heissluft mindestens eine Anpressrolle (25) vorgesehen ist, vorzugsweise zwei Anpressrollen (25).

9. Verfahren zum Verschweissen von Folien bzw. Kunststoffbahnen mittels einer Vorrichtung nach einem der Ansprüche 1 bis 8, dadurch gekennzeichnet, dass vor oder beim Verschweissen mittels Heissluft je die Oberfläche der beiden miteinander zu verbindenden Folien bzw. Kunststoffbahnen angeschliffen bzw. angerauht werden.

## Claims

1. Apparatus for welding films or plastic webs having a hot air generator and a nozzle (23), which has a preferably slit-like opening (27) for discharging the hot air and is provided to blow the hot air between two films or plastic sheets (3, 5) to be welded, including at least one roller- or drum-like grinding device (41), which is mounted on the preferably slit-like nozzle or opening (27) or is arranged downstream of it in the processing direction, in order to grind or roughen the surfaces to be welded of the films or sheets before they are pressed together, characterised in that provided in the vicinity of the nozzle or the opening are guide or grinding plates (33, 35) which project upwardly and/or downwardly and along which the plastic sheets to be welded are guided or slide before the welding process.

2. Apparatus as claimed in Claim 1, characterised in that the roller (41) comprises a plurality of cylindrical rollers or drums (43) which are arranged next to one another and are arranged on a clip-like mounting or transverse bar (45) suspended on the hot air supply body (29).

3. Apparatus as claimed in Claim 2, characterised in that the rollers or drums (43) have a roughened surface and each central retaining bore (40) is eccentrically arranged so that when there is uneven or unequal engagement the rollers or drums can adapt to it.

4. Apparatus as claimed in one of Claims 1 to 3, characterised in that the grinding roller (41) further has a guide bracket (49), which extends laterally away from the base film (3) and engages externally around the upper film (5) to be connected to the support film, in order to guide the upper film (5) against the grinding roller or to retain it against the latter.

5. Apparatus as claimed in one of Claims 1 to 4, characterised in that means (48) are provided on the grinding roller (41) in order to limit upward or downward deflection with respect to the slit-like opening (27).

6. Apparatus as claimed in Claim 1, characterised in that spring-like plates (33, 35) project downwardly or upwardly from the nozzle or from the preferably slit-like opening (27), whereby a plurality of plates are arranged next to one another transverse to the direction of the hot air to be blown out such that the contour of each surface to be ground of the film or plastic sheet can adapt.

7. Apparatus as claimed in one of Claims 1 to 6, characterised in that perforations or extremely small holes (31) are provided on the nozzle, which is arranged before the preferably slit-like opening (27) in the hot air supply passage or body (29) in order to pre-heat the two film surfaces to be connected.

8. Apparatus as claimed in one of Claims 1 to 7, characterised in that at least one pressure roller (25), preferably two pressure rollers (25), is provided after the opening for the discharge of the hot air in the processing direction.

9. A method of welding films or plastic webs by means of an apparatus as claimed in one of Claims 1 to 8, characterised in that before or during welding, the surface of each of the two films or plastic sheets to be connected together are ground or roughened.

## Revendications

1. Dispositif pour souder des feuilles ou des bandes de matière plastique, avec une production d'air chaud et une buse (23) qui est de préférence pourvue d'une ouverture en forme de fente (27) pour fournir l'air chaud et qui est destinée à injecter l'air chaud entre deux feuilles ou bandes de matière plastique (3, 5) à souder, et avec au moins un dispositif de frottement en forme de rouleau ou de cylindre (41) qui est monté en amont de la buse ou de l'ouverture de préférence en forme de fente (27) ou derrière celle-ci, dans le sens de traitement, pour soumettre au frottement ou rendre rugueuses les surfaces à souder des feuilles ou des bandes avant que celles-ci ne soient pressées l'une contre l'autre, caractérisé en ce qu'il est prévu, dans la zone de la buse ou de l'ouverture, des tôles de guidage ou de frottement (33, 35) qui font saillie vers le haut et/ou vers le bas et le long desquelles les bandes de matière plastique à souder sont guidées et frottent avant d'être soudées.

2. Dispositif selon la revendication 1, caractérisé en ce que le cylindre (41) se compose de plusieurs rouleaux cylindriques ou cylindres (43) alignés qui sont enfilés sur une barre de fixation ou barre transversale (45) en forme de pince accrochée à l'ouverture (27) ou au corps d'amenée d'air chaud (29).

3. Dispositif selon la revendication 2, caractérisé en ce que les rouleaux ou cylindres (43) présentent une surface rugueuse et le perçage de fixation central (44) de chacun d'eux a une forme excentrique pour que dans le cas d'une surface d'appui inégale, les rouleaux ou cylindres puissent s'adapter à cette surface.

4. Dispositif selon l'une des revendications 1 à 3, caractérisé en ce que le cylindre de frottement (41) comporte également une pièce courbe de guidage (49) qui va en s'éloignant de la couche inférieure (3), latéralement, et enveloppe, côté extérieur, la feuille supérieure (5) à relier à celle-ci, pour guider ladite feuille supérieure (5) vers le cylindre de frottement ou la maintenir sur celui-ci.

5. Dispositif selon l'une des revendications 1 à 4, caractérisé en ce qu'il est prévu sur le cylindre de frottement (41) des moyens (48) pour limiter une déviation vers le haut ou vers le bas par rapport à l'ouverture en forme de fente (27).

6. Dispositif selon la revendication 1, caractérisé en ce que des lamelles en forme de ressorts (33, 35) dépassent vers le bas ou vers le haut de la buse ou de l'ouverture de préférence en forme de fente (27), étant précisé que plusieurs lamelles sont juxtaposées transversalement par rapport au sens de l'air chaud à éjecter, de telle sorte qu'elles peuvent s'adapter au contour de la surface de la feuille ou de la bande de matière plastique à soumettre au frottement.

7. Dispositif selon l'une des revendications 1 à 6, caractérisé en ce que des perforations ou des trous minuscules (31) sont prévus dans le conduit ou le corps d'amenée d'air chaud (29), en amont de la buse ou de l'ouverture de préférence en forme de fente (27), pour préchauffer les deux surfaces de feuilles à relier.

8. Dispositif selon l'une des revendications 1 à 7, caractérisé en ce qu'il est prévu à la suite de l'ouverture de sortie d'air chaud, dans le sens de traitement, au moins un rouleau presseur (25), et de préférence deux rouleaux presseurs (25).

9. Procédé pour souder des feuilles ou des bandes de matière plastique à l'aide d'un dispositif selon l'une des revendications 1 à 8, caractérisé en ce qu'avant ou pendant le soudage à l'aide de l'air chaud, la surface des deux feuilles ou bandes de matière plastique à relier est soumise à un frottement ou est rendue rugueuse.
